# EUROPÄISCHE PATENTSCHRIFT

(11) **EP 1 875 004 B1**
(45) Veröffentlichungstag und Bekanntmachung des Hinweises auf die Patenterteilung: **14.07.2010**
(21) Anmeldenummer: 06725194.2
(22) Anmeldetag: 21.03.2006
(51) Int. Cl.: E01C 23/088, E01C 21/00

(54) **BAUMASCHINE INSBESONDERE STRASSENFRÄSMASCHINE, RECYCLER ODER STABILISIERER, SOWIE ANTRIEBSSTRANG FÜR DERARTIGE BAUMASCHINEN**
CONSTRUCTION MACHINE, IN PARTICULAR ROAD MILLING MACHINE, RECYCLER OR STABILISER AND DRIVE TRAIN FOR CONSTRUCTION MACHINES OF THIS TYPE
ENGIN DE CHANTIER, NOTAMMENT MACHINE A FRAISER LA CHAUSSEE, RECYCLEUR OU STABILISATEUR ET CHAINE CINEMATIQUE POUR CE TYPE D'ENGINS DE CHANTIER

(30) Priorität: 15.04.2005 DE 102005017754
(43) Veröffentlichungstag der Anmeldung: 09.01.2008
(73) Patentinhaber: Wirtgen GmbH, 53578 Windhagen (DE)
(72) Erfinder: BUSLEY, Peter, 53545 Linz Am Rhein (DE); SIMONS, Dieter, 53567 Buchholz (DE)
(74) Vertreter: von Kreisler Selting Werner
(86) Internationale Anmeldenummer: PCT/EP2006/060907
(87) Internationale Veröffentlichungsnummer: WO 2006/108757

(56) Entgegenhaltungen:
- EP-A- 0 305 658
- CH-A- 606 626
- DE-C1- 10 031 195
- US-A- 4 929 121

## Beschreibung

Die Erfindung betrifft einen Antriebsstrang mit einem Maschinenrahmen für eine Baumaschine nach dem Oberbegriff des Anspruchs 1, sowie eine Baumaschine, insbesondere eine Straßenfräsmaschine, einen Recycler oder einen Stabilisierer mit einem derartigen Antriebsstrang und Maschinenrahmen nach dem Oberbegriff des Anspruchs 14.

Baumaschinen dieser Art sind beispielsweise aus der DE 10031195 C1 bekannt. Die Baumaschine zum Bearbeiten von Bodenoberflächen weist ein Fahrwerk auf, das einen Maschinenrahmen trägt. Eine Arbeitswalze wird mechanisch angetrieben von einem Antriebsstrang, der aus einem Antriebsmotor, einem Pumpenverteilergetriebe, einer Schaltkupplung und einem Riementrieb besteht. Mit Hilfe der Schaltkupplung kann der direkte mechanische Antrieb der aus einer Fräswalze bestehenden Arbeitswalze zugeschaltet oder wieder getrennt werden.

Die US-A-4929121 offenbart einen Antriebsstrang mit einem Maschinenrahmen nach dem Oberbegriff des Anspruchs 1 und beschreibt ein Steuersystem für ein Straßenplaniergerät mit einer Schneidvorrichtung, wobei das Steuersystem Mittel zum Auswählen von einer aus einer Vielzahl von vorbestimmten Schneidvorrichtungsbetriebsarten und zum Entwickeln und Liefern eines ersten Ausgangssignals, das der ausgewählten Betriebsart entspricht; und Mittel zum Steuern ausgewählter Mittel aus den Riemenspannsteuermitteln, Bremssteuermitteln und Kupplungssteuermitteln in einer vorgewählten Reihenfolge ansprechend auf den Empfang des ersten Ausgangssignals aufweist.

Die Lagerung des Antriebsmotors muss sehr steif ausgebildet sein, denn diese ist gleichzeitig die Lagerung für die antriebsseitige Riemenscheibe des Riementriebs relativ zum Maschinenrahmen. Es versteht sich, dass eine koaxiale starr gelagerte Anordnung der die Elemente des Antriebsstrangs verbindenden Wellen erforderlich ist und dass hinsichtlich des Riementriebes eine starre achsparallele Anordnung der antriebsseitigen und der abtriebsseitigen Riemenscheibe Grundvoraussetzung für die Funktionstüchtigkeit und Langlebigkeit eines solchen Riemenantriebes ist. Eine weiche elastische Lagerung ist insbesondere deswegen nicht ausführbar, weil die antriebsseitige Riemenscheibe fliegend gelagert ist. Dies bedeutet, dass die beiden Stützstellen der Lagerung sich auf einer Seite der Riemenscheibe befinden, wobei die Riemenscheibe selbst auf der der Lagerung gegenüberliegenden Seite frei ausragt.

Eine beidseitige Lagerung der Riemenscheibe ist aufgrund der einzuhaltenden Transportbreite der Maschine nicht erwünscht. Nachteilig ist bei der steifen Lagerung des Antriebsstrangs, dass Schwingungen des Antriebsmotors im größeren Umfang auf den Maschinenrahmen übertragen werden. Die Schwingungen sind nicht nur unangenehm für den Fahrzeugführer in Form der auf ihn übertragenen Schwingungen, sondern beeinträchtigen die Arbeitsbedingungen, indem größere flache Maschinenbauteile, wie z.B. Hauben, Tanks zu Schallschwingungen angeregt werden, die beim Betrieb der Maschine störend sind.

Bei dem Bemühen, die Leistung zu erhöhen, steigt der Platzbedarf für den Antriebsmotor, der innerhalb der fest vorgegebenen Transportbreite untergebracht werden muss.

Der Erfindung liegt daher die Aufgabe zugrunde, eine Baumaschine der eingangs genannten Art sowie einen Antriebsstrang für derartige Baumaschinen derart weiterzuentwickeln, dass weniger Schwingungen des Antriebsmotors auf den Ma schinenrahmen übertragen werden, wobei der Antriebsstrang gleichzeitig ausreichend starr sein soll, um hohe mechanische Leistungen übertragen zu können.

Zur Lösung dieser Aufgabe dienen die Merkmale des Anspruchs 1 bzw. 14.

Die Erfindung sieht in vorteilhafter Weise vor, dass die erste Gruppe mit dem Antriebsmotor zur Verringerung der Übertragung von Schwingungen auf den Maschinenrahmen mit einer geringen, die Schwingungen des Antriebsmotors dämpfenden Federsteifigkeit elastisch an dem Maschinenrahmen befestigt ist und die zweite Gruppe mit hoher Federsteifigkeit oder starr an dem Maschinenrahmen befestigt ist. Die Aufteilung des Antriebsstrangs in zwei Gruppen ermöglicht es, zur Verringerung der Übertragung von Schwingungen des Antriebsmotors auf den Maschinenrahmen, die Gruppen des Antriebsstrangs unterschiedlich starr auf dem Maschinenrahmen zu lagern. Die gelenkige Kopplungseinrichtung zwischen der ersten und der zweiten Gruppe kann das unterschiedliche Schwingungsverhalten der ersten und der zweiten Gruppe aufgrund der Gelenkigkeit ausgleichen, ohne eine hohe Leistungsübertragung zu behindern.

Im Resultat bedeutet dies, dass die Lagerung des Verbrennungsmotors mit gegebenenfalls weiteren Elementen des Antriebsstrangs in der ersten Gruppe erheblich weicher erfolgen kann als die Lagerung der in der zweiten Gruppe untergebrachten Elemente des Antriebsstrangs, die so steif wie möglich oder starr an dem Maschinenrahmen befestigt sein sollen.

Durch die Aufteilung des Antriebsstrangs in zwei Gruppen, kann in vorteilhafter Weise einerseits erreicht werden, dass die eine Gruppe, die den Antriebsmotor, vorzugsweise ein Verbrennungsmotor, enthält, relativ weich an dem Maschinenrahmen gelagert ist, wodurch die auf den Maschinenrahmen übertragenen Schwingungen des Antriebsmotors sehr stark gedämpft werden und andererseits, dass die andere Gruppe mit hoher Federsteifigkeit nahezu starr oder starr an dem Maschinenrahmen gelagert werden kann, wodurch höhere Kräfte abgestützt werden und damit höhere Leistungen übertragbar sind. Dabei ist die erste und die zweite Gruppe, die unterschiedlich starr an dem Maschinenrahmen befestigt sind, über eine gelenkige Kopplungseinrichtung miteinander verbunden, so dass ein geringfügiger dynamischer Achsversatz und/oder Winkelfehler der Abtriebswelle der ersten Gruppe mit dem Antriebsmotor gegenüber der Antriebswelle der zweiten Gruppe zulässig ist.

Bei einem bevorzugten Ausführungsbeispiel ist vorgesehen, dass die erste Gruppe mindestens den Antriebsmotor und die Einrichtung zum Antrieb von mindestens einer Hydraulikpumpe und die zweite Gruppe die Einrichtung zum Schalten des Drehmomentes und/oder die Lagerung eines antriebsseitigen Antriebselementes des Zugmittelgetriebes, vorzugsweise eines Riementriebes, aufweist. Bei diesem Ausführungsbeispiel ist der Antriebsmotor starr mit der Einrichtung zum Antrieb der mindestens einen Hydraulikpumpe gekoppelt und gemeinsam mit dieser Einrichtung elastisch gegenüber dem Maschinenrahmen gelagert.

Die zweite Gruppe weist die Einrichtung zum Schalten des Drehmomentes, mit deren Hilfe der Kraftfluss unterbrochen werden kann und/oder die Lagerung des antriebsseitigen Antriebselementes des Zugmittelgetriebes. Diese zweite Gruppe kann starr oder zumindest nahezu starr an dem Maschinenrahmen befestigt sein.

Diese Ausführungsform hat den Vorteil, dass die ebenfalls Schwingungen generierende Einrichtung zum Antrieb von mindestens einer Hydraulikpumpe gemeinsam mit dem Antriebsmotor, vorzugsweise einem Verbrennungsmotor, in der ersten Gruppe des Antriebsstrangs weich gelagert werden kann. Außerdem ist es vorteilhaft bei dieser Ausführungsform, dass trotz entkoppeltem Antriebsstrang für die Fräswalze, die hydraulische Versorgung der Maschine bei laufendem Antriebsmotor sichergestellt ist. Die dagegen nur geringe Schwingungen erzeugenden Elemente des Antriebsstrangs sind in der zweiten Gruppe zusammengefasst. Die erste Gruppe weist mindestens den Antriebsmotor und die Einrichtung zum Schalten des Drehmomentes und die zweite Gruppe aus der Einrichtung zum Antrieb von mindestens einer Hydraulikpumpe und/oder die Lagerung eines antriebsseitigen Antriebselementes des Zugmittelgetriebe auf.

Nach einer weiteren alternativen Ausführungsform ist vorgesehen, dass die erste Gruppe mindestens den Antriebsmotor aufweist und die zweite Gruppe die Einrichtung zum Antrieb der mindestens einen Hydraulikpumpe, sowie die Einrichtung zum Schalten des Drehmomentes und/oder die Lagerung des antriebsseitigen Antriebselementes des Zugmittelgetriebes aufweist.

Die gelenkige Kopplungseinrichtung kann drehstarr sein. Beispielsweise kann die gelenkige Kopplungseinrichtung eine Kardanwelle sein. Alternativ kann die gelenkige Kopplungseinrichtung auch drehelastisch sein, beispielsweise eine Elastomerkupplung sein.

Die Einrichtung zum Antrieb der mindestens einen Hydraulikpumpe und die Einrichtung zum Schalten des Drehmoments sowie die Lagerung des antriebsseitigen Antriebselementes des Zugmittelgetriebes können eine gemeinsam mit hoher Federsteifigkeit oder starr an dem Maschinenrahmen befestigte Einheit bilden.

Die Einrichtung zum Antrieb der mindestens einen Hydraulikpumpe kann aus einem Pumpen-Verteilergetriebe für mehrere Hydraulikpumpen bestehen.

Die Einrichtung zum Schalten des Drehmomentes ist vorzugsweise zwischen der Einrichtung zum Antrieb der mindestens einen Hydraulikpumpe und den antriebsseitigen Antriebselementes des Zugmittelgetriebes angeordnet.

Das Verteilergehäuse kann ein Getriebegehäuse mit mehreren an einem Außenumfang des Getriebegehäuses angeordneten Hydraulikpumpen aufweisen, die mittels des Verteilergetriebes gemeinsam antreibbar sind. Die Hydraulikpumpen stehen in Richtung auf den Antriebsmotor von dem Getriebegehäuse oder von dem Antriebsmotor wegweisend ab. Die Kopplungseinrichtung erstreckt sich in dem von Hydraulikpumpen freien Innenraum des Getriebegehäuses. Die Anordnung der Kopplungseinrichtung in dem freien Innenraum des Getriebegehäuses ermöglicht eine kompakte Bauweise.

Bei einem bevorzugten Ausführungsbeispiel ist vorgesehen, dass die Kopplungseinrichtung eine Ausgangswelle des Antriebsmotors permanent mit einer Eingangswelle der Einrichtung zum Antrieb der mindestens einen Hydraulikpumpe und/oder einer Eingangswelle der Einrichtung zum Schalten des Drehmomentes koppelt. Die Anordnung der Kopplungseinrichtung in dem radial inneren Zwischenraum des Getriebegehäuses, das frei von Hydraulikpumpen ist, ermöglicht eine kompakte Bauweise des Antriebsstrangs und zwar sowohl in dem Fall, in dem das Verteilergetriebe Bestandteil der ersten Gruppe ist, bei der die Hydraulikpumpen von dem Antriebsmotor wegweisen, als auch in dem Fall, in dem das Verteilergetriebe das Eingangselement der zweiten Gruppe bildet, bei der die Hydraulikpumpen in Richtung auf den Antriebsmotor vorstehen.

Die Kopplungseinrichtung koppelt eine Ausgangswelle des Antriebsmotors oder der ersten Gruppe permanent mit einer Eingangswelle der Einrichtung zum Antrieb der mindestens einen Hydraulikpumpe oder einer Eingangswelle der Einrichtung zum Schalten des Drehmomentes oder der zweiten Gruppe.

Im Folgenden werden unter Bezugnahme auf die Zeichnungen Ausführungsbeispiele der Erfindung näher erläutert. Es zeigen:
- Fig. 1: ein erstes Ausführungsbeispiel der Erfindung an dem Beispiel einer Stra- ßenfräsmaschine,
- Fig. 2: ein zweites Ausführungsbeispiel,
- Fig. 3: ein drittes Ausführungsbeispiel,
- Fig. 4: ein viertes Ausführungsbeispiel, und
- Fig. 5: eine Seitenansicht des Ausführungsbeispiels der Fig. 4.

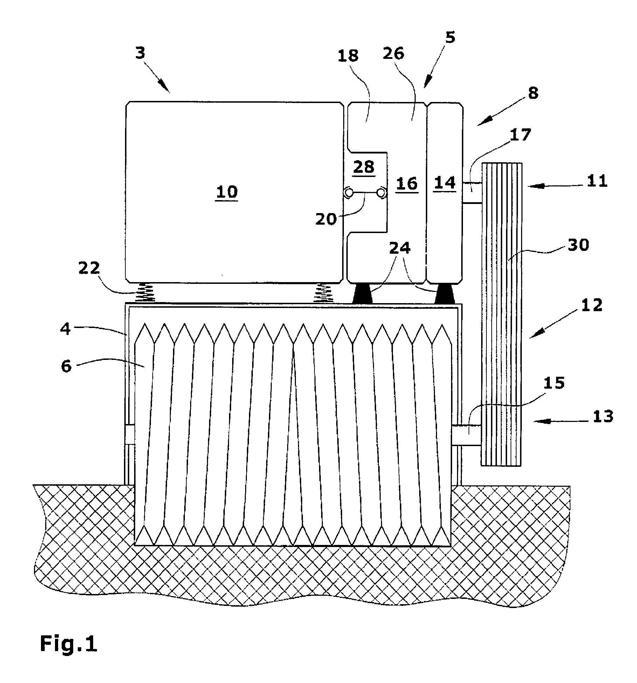

Fig. 1 zeigt schematisch einen Querschnitt durch eine Baumaschine, nämlich insbesondere eine Straßenfräsmaschine, einen Recycler oder einen Stabilisierer mit einer Arbeitswalze 6, die in einem Maschinenrahmen 4 gelagert ist. Alternativ kann die Arbeitswalze 6 in einem Walzengehäuse gelagert sein, das wiederum mit dem Maschinenrahmen fest verbunden ist oder auch an einem Maschinenrahmen 4 schwenkbar gelagert sein kann. Der Maschinenrahmen 4 wird von einem Fahrwerk getragen, das in den Zeichnungen nicht dargestellt ist. Die Arbeitswalze 6 kann beispielsweise aus einer Fräswalze bestehen. Die Arbeitswalze 6 der Baumaschine wird von einem Antriebsstrang 8 angetrieben, der mindestens folgende Elemente aufweist:
Der Antriebsstrang 8 enthält einen Antriebsmotor 10, der vorzugsweise aus einem Verbrennungsmotor besteht.

Ein Zugmittelgetriebe 12 für den mechanischen Antrieb der Arbeitswalze 6 weist ein Antriebselement 11, das mit einer Abtriebswelle 17 drehfest gekoppelt ist, und ein Abtriebselement 13, das mit der Antriebswelle 15 der Arbeitswalze 6 drehfest gekoppelt ist. Zwischen der Antriebswelle 15 und der Arbeitswalze 6 kann noch ein Planetengetriebe angeordnet sein.

Das Zugmittelgetriebe 12 ist vorzugsweise ein Riementrieb, wobei die Antriebs- und Abtriebselemente 11,13 aus Riemenscheiben bestehen, über die mehrere Treibriemen 30 umlaufen. Alternativ kann das Zugmittelgetriebe 12 auch aus einem Kettenantrieb bestehen, wobei dann die Antriebs- und Abtriebselemente 11,13 aus entsprechenden Ritzeln bestehen.

Der Antriebsstrang 8 weist ferner eine Einrichtung zum Schalten des Drehmomentes 14, die im Antriebsstrang 8 zwischen dem Antriebsmotor 10 und der Arbeitswalze 6 angeordnet ist und vorzugsweise aus einer Schaltkupplung besteht.

Der Antriebsstrang 8 enthält des weiteren eine mit dem Antriebsmotor 10 gekoppelte Einrichtung 16 zum Antrieb von hydraulischen Aggregaten, z.B. Hydraulikpumpen 18.

Der gesamte Antriebsstrang 8 ist in mindestens zwei Gruppen unterteilt, wobei die erste Gruppe zumindest den Antriebsmotor 10 und die zweite Gruppe mindestens das Antriebselement des Zugmittelgetriebes 11 aufweist. Dabei ist die erste und die zweite Gruppe 3,5 über eine gelenkige Kopplungseinrichtung 20 miteinander mechanisch verbunden. Die gelenkige Kopplungseinrichtung 20 überträgt die von einer nicht dargestellten Abtriebswelle des Antriebsmotors 10 abgegebene Leistung an die zweite Gruppe 5 des Antriebsstrangs 8.

In der Fig. 1 besteht die erste Gruppe nur aus dem Verbrennungsmotor 10, der mit der zweiten Gruppe 5 über die Kopplungseinrichtung 20 gekoppelt ist. Die zweite Gruppe 5 besteht in dem Ausführungsbeispiel der Fig. 1 aus der Einrichtung 16 zum Antrieb von mindestens einer Hydraulikpumpe 18, nämlich einem Pumpenverteilergetriebe, der Schaltkupplung 14 und der Riemenscheibe 11 des Riementriebes 12.

Der Verbrennungsmotor 10 ist mit Hilfe von elastischen Feder-/Dämpfungsmitteln 22, die eine geringe Federsteifigkeit aufweisen, an dem Maschinenrahmen 4 befestigt, derart, dass die insbesondere bei einem Verbrennungsmotor 10 auftretenden Vibrationen sowie Körperschall geringstmöglich auf den Maschinenrahmen 4 übertragen werden.

Die zweite Gruppe 5 dagegen ist mit Feder-/Dämpfungselementen 24 an dem Maschinenrahmen 4 befestigt, die eine hohe Federsteifigkeit aufweisen, so dass die zweite Gruppe 5 nahezu starr an dem Maschinenrahmen 4 befestigt ist. Die unterschiedliche Lagerung oder Befestigung der ersten und zweiten Gruppe 3,5 des Antriebsstrangs 8 bewirkt, dass die nicht dargestellte Abtriebwelle des Verbrennungsmotors 10 im Betrieb nicht permanent mit der ebenfalls nicht dargestellten Eingangswelle des Pumpenverteilergetriebes 16 exakt fluchtet, wobei die gelenkige Kopplungseinrichtung 20 die im Betrieb auftretenden dynamischen Fluchtungsfehler ausgleicht, ohne dass der Leistungsfluss im Antriebsstrang 8 gestört wird.

Durch die Aufteilung des Antriebsstrangs und die unterschiedliche Lagerung der Komponenten des Antriebsstrangs 8 wird erreicht, dass erheblich geringere Schwingungen von dem Verbrennungsmotor 10 auf den Maschinenrahmen 4 übertragen werden. Auf diese Weise wird des weiteren verhindert, dass größere flache Maschinenbauteile zu Schallschwingungen angeregt werden, die beim Betrieb der Maschine störend sind.

Die gelenkige Kopplungseinrichtung 20 kann drehstarr sein und aus einer Kardanwelle bestehen.

Alternativ kann die gelenkige Kopplungseinrichtung 20 auch drehelastisch sein, wobei die Kopplungseinrichtung dann aus einer Elastomerkupplung besteht.

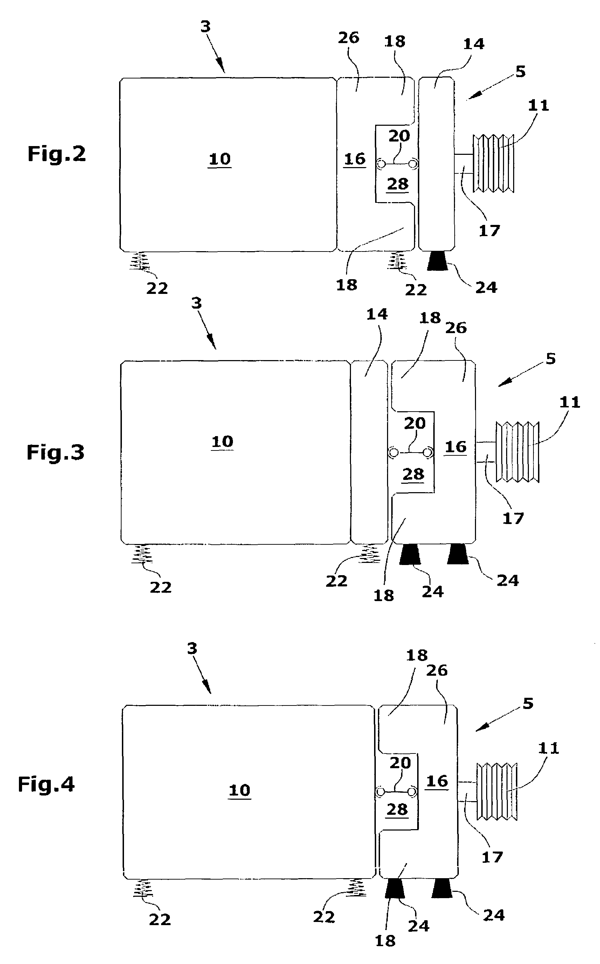

Fig. 2 zeigt ein zweites Ausführungsbeispiel, bei dem die erste Gruppe 3 aus dem Verbrennungsmotor 10 und dem Pumpenverteilergetriebe 16 besteht. Das Pumpenverteilergetriebe 16 weist wie bei dem Ausführungsbeispiel der Fig. 1 mehrere Hydraulikpumpen 18 auf, die umfangsmäßig vorzugsweise gleich verteilt von dem Getriebegehäuse 26 des Pumpenverteilergetriebes 16 axial abstehen.

Im Inneren des Pumpenverteilergetriebes ist ein Stirnradgetriebe angeordnet, das die einzelnen Hydraulikpumpen gemeinsam antreibt. Durch die Anordnung der Hydraulikpumpen 18 ergibt sich ein zentraler freier Innenraum 28 zwischen den Hydraulikpumpen 18, in dem sich die Kopplungseinrichtung 20 zum Verbinden der ersten und der zweiten Gruppe 3,5 des Antriebsstrang 8 erstrecken kann. Aufgrund dieser Gestaltung des Pumpenverteilergetriebes 16 mit einem freien Innenraum 28 kann der zur Verfügung stehende Platz für die Anordnung des Antriebsstrangs 8 über die Breite der Maschine besser genutzt werden, so dass aufgrund der platz- und raumsparenden Anordnung der Komponenten des Antriebsstrangs 8 ein leistungsfähigerer Verbrennungsmotor 10 verwendet werden kann.

Bei dem Ausführungsbeispiel der Fig. 2 gehört auch das Pumpenverteilergetriebe 16 zur ersten Gruppe, so dass auch Schwingungen, die vom Pumpenverteilergetriebe herrühren könnten, von der Feder-/Dämpfungseinrichtung 22 absorbiert werden können.

Die zweite Gruppe 5 wird von der Schaltkupplung 14 und der Riemenscheibe 11 des Riementriebs 12 gebildet. Mit Hilfe der Kopplungseinrichtung 20 wird die Leistung des Verbrennungsmotors zunächst auf die Schaltkupplung 14 und dann auf die Riemenscheibe 11 übertragen.

Soweit auch die Treibriemen 30 und die als Abtriebselement dienende zweite Riemenscheibe 13 zum Antriebsstrang 8 gehören, ist festzustellen, dass diese ebenfalls starr gegenüber dem Maschinenrahmen 4 gelagert sind, nämlich dadurch, dass die zweite Riemenscheibe 13 auf der Antriebswelle 15 der Arbeitswalze 6 angeordnet ist.

Bei einer weiteren nicht dargestellten Variante des Ausführungsbeispiels der Fig. 2 kann das Pumpenverteilergetriebe 16 auf der der Kopplungseinrichtung 20 gegenüberliegenden Seite des Verbrennungsmotors 10 angeordnet sein, so dass in diesem Fall ebenfalls der Verbrennungsmotor 10 und das Pumpenverteilergetriebe 16 die erste Gruppe 3 des Antriebsstrangs bilden. Diese Ausführungsform ist vorteilhaft, wenn eine gute Zugänglichkeit der Komponenten des Antriebsstrangs 8 erwünscht ist.

Bei dem Ausführungsbeispiel der Fig. 3 besteht die erste Gruppe 3 des Antriebsstrangs aus dem Verbrennungsmotor 10 und der Schaltkupplung 14. Diese Ausführungsform hat auch den Vorteil der guten Nutzbarkeit der zur Verfügung stehenden Breite des Maschinenrahmens 4.

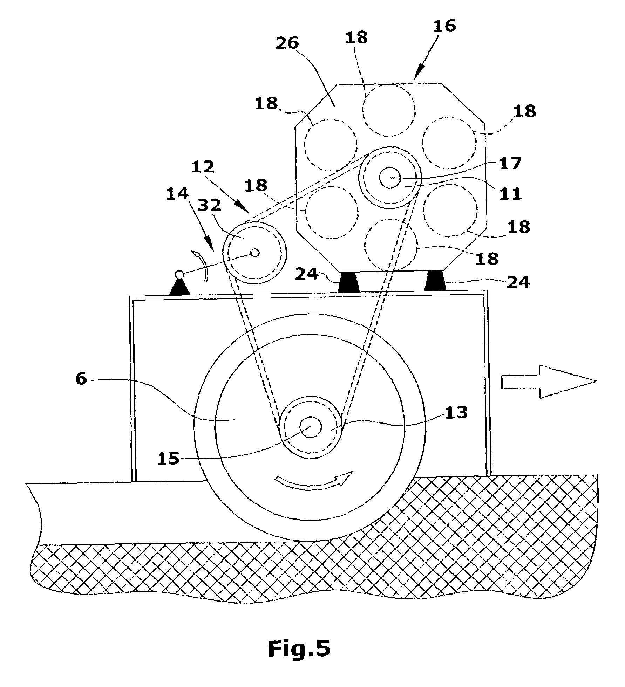

Die Fign. 4 und 5 zeigen ein Ausführungsbeispiel, bei dem die erste Gruppe 3 des Antriebsstrangs 8 von dem Verbrennungsmotor 10 gebildet ist, der über die Kopplungseinrichtung 20 mit dem Pumpenverteilergetriebe 16 gekoppelt ist. Das Pumpenverteilergetriebe bildet mit der Riemenscheibe 11 des Riementriebs 12 die zweite Gruppe 5 des Antriebsstrangs 8, die starr oder nahezu starr auf dem Maschinenrahmen 4 gelagert ist.

Wie aus Fig. 5 ersichtlich, weist das Pumpenverteilergetriebe beispielsweise sechs Hydraulikpumpen 18 auf, die kreisförmig und mit beispielsweise gleichem gegenseitigen Abstand um die Abtriebswelle 17 der zweiten Gruppe 5 des Antriebsstrangs 8 angeordnet sind.

Die Schaltkupplung 14 wird durch die Spannrolle 32 des Riementriebs 12 gebildet, die im Leerlauf des Verbrennungsmotors 10 betätigt werden kann. Ist die Spannrolle 32 in der Position, in der die Treibsriemen 30 gespannt sind, kann die Leistung des Verbrennungsmotors 10 auf die Arbeitswalze 6 übertragen werden. Wird die Spannrolle 32 entgegen der in Fig. 5 ersichtlichen Pfeilrichtung verschwenkt, kann keine Leistung mehr übertragen werden, so dass die Spanneinrichtung mit der Spannrolle 32 als Schaltkupplung verwendet werden kann.

## Patentansprüche

1. Antriebsstrang mit einem Maschinenrahmen für eine Baumaschine mit einer Arbeitseinrichtung, die als Arbeitswalze (6) ausgebildet ist, wobei der Antriebsstrang (8) folgende Elemente aufweist:
- einen Antriebsmotor (10),
- ein Zugmittelgetriebe (12) für den mechanischen Antrieb der Arbeitswalze (6) mit einem Antriebs- und einem Abtriebselement und einem Zugmittel (30),
- eine Einrichtung zum Schalten des Drehmomentes (14) zwischen Antriebsmotor (10) und Arbeitswalze (6), und
- eine Einrichtung (16) zum Antrieb von mindestens einer Hydraulikpumpe,
wobei
- die Elemente des Antriebsstranges (8) in mindestens zwei Gruppen unterteilt sind,
- wobei die erste Gruppe (3) mindestens den Antriebsmotor (10) aufweist, und
- die zweite Gruppe (5) mindestens das Antriebselement (11) des Zugmittelgetriebes (12) aufweist,
- wobei die erste und die zweite Gruppe (3,5) über eine gelenkige Kopplungseinrichtung (20) miteinander verbunden sind **dadurch gekennzeichnet, dass** die erste Gruppe zur Verringerung der Übertragung von Schwingungen auf den Maschinenrahmen (4) mit einer geringen Federsteifigkeit elastisch an dem Maschinenrahmen (4) befestigt ist, und dass die zweite Gruppe mit hoher Federsteifigkeit oder starr an dem Maschinenrahmen (4) befestigt ist.

2. Antriebsstrang mit einem Maschinenrahmen nach Anspruch 1, **dadurch gekennzeichnet, dass** die erste Gruppe (3) mindestens den Antriebsmotor (10) und die Einrichtung (16) zum Antrieb von mindestens einer Hydraulikpumpe und die zweite Gruppe (5) die Einrichtung (14) zum Schalten des Drehmomentes und/oder die Lagerung eines antriebsseitigen Antriebselementes (11) des Zugmittelgetriebes (12) aufweist.

3. Antriebsstrang mit einem Maschinenrahmen nach Anspruch 1, **dadurch gekennzeichnet, dass** die erste Gruppe (3) mindestens den Antriebsmotor (10) und die Einrichtung (14) zum Schalten des Drehmomentes und die zweite Gruppe aus der Einrichtung (16) zum Antrieb von mindestens einer Hydraulikpumpe und/oder die Lagerung eines antriebsseitigen Antriebselementes (11) des Zugmittelgetriebe (12) aufweist.

4. Antriebsstrang mit einem Maschinenrahmen nach Anspruch 1, **dadurch gekennzeichnet, dass** die erste Gruppe (3) mindestens den Antriebsmotor (10) aufweist und die zweite Gruppe (5) die Einrichtung (16) zum Antrieb der mindestens einen Hydraulikpumpe, sowie die Einrichtung (14) zum Schalten des Drehmomentes und/oder die Lagerung des antriebsseitigen Antriebselementes (11) des Zugmittelgetriebes (12) aufweist.

5. Antriebsstrang mit einem Maschinenrahmen nach einem der Ansprüche 1 bis 4, **dadurch gekennzeichnet, dass** die gelenkige Kopplungseinrichtung (20) drehstarr ist.

6. Antriebsstrang mit einem Maschinenrahmen nach Anspruch 1 bis 5, **dadurch gekennzeichnet, dass** die gelenkige Kopplungseinrichtung (20) eine Kardanwelle ist.

7. Antriebsstrang mit einem Maschinenrahmen nach einem der Ansprüche 1 bis 4, **dadurch gekennzeichnet, dass** die gelenkige Kopplungseinrichtung (20) drehelastisch ist.

8. Antriebsstrang mit einem Maschinenrahmen nach Anspruch 7, **dadurch gekennzeichnet, dass** die gelenkige Kopplungseinrichtung eine Elastomerkupplung ist.

9. Antriebsstrang mit einem Maschinenrahmen nach einem der Ansprüche 4 bis 8, **dadurch gekennzeichnet, dass** die Einrichtung (16) zum Antrieb der mindestens einen Hydraulikpumpe und die Einrichtung zum Schalten des Drehmoments (14) sowie die Lagerung des antriebsseitigen Antriebselementes (11) des Zugmittelgetriebes (12) eine gemeinsam, mit hoher Federsteifigkeit oder starr an dem Maschinenrahmen (4) befestigte Einheit bilden.

10. Antriebsstrang mit einem Maschinenrahmen nach einem der Ansprüche 1 bis 9, **dadurch gekennzeichnet, dass** die Einrichtung (16) zum Antrieb der mindestens einen Hydraulikpumpe aus einem Pumpen-Verteilergetriebe für mehrere Hydraulikpumpen besteht.

11. Antriebsstrang mit einem Maschinenrahmen nach einem der Ansprüche 1 bis 10, **dadurch gekennzeichnet, dass** die Einrichtung (14) zum Schalten des Drehmomentes zwischen der Einrichtung (16) zum Antrieb der mindestens einen Hydraulikpumpe und dem antriebsseitigen Antriebselement (11) des Zugmittelgetriebes (12) angeordnet ist.

12. Antriebsstrang mit einem Maschinenrahmen nach Anspruch 10 oder 11, **dadurch gekennzeichnet, dass** das Verteilergetriebe ein Getriebegehäuse (26) mit mehreren an einem Außenumfang des Getriebegehäuses (26) angeordneten Hydraulikpumpen (18) aufweist, die mittels des Verteilergetriebes antreibbar sind, wobei die Hydraulikpumpen in Richtung auf den Antriebsmotor (10) von dem Getriebegehäuse (26) oder von dem Antriebsmotor (10) wegweisend abstehen und die Kopplungseinrichtung (20) sich in dem von Hydraulikpumpen (18) freien Innenraum (28) des Getriebegehäuses (26) erstreckt.

13. Antriebsstrang mit einem Maschinenrahmen nach einem der Ansprüche 1 bis 12, **dadurch gekennzeichnet, dass** die Kopplungseinrichtung (20) eine Ausgangswelle des Antriebsmotors (10) oder der ersten Gruppe permanent mit einer Eingangswelle der Einrichtung (16) zum Antrieb der mindestens einen Hydraulikpumpe oder einer Eingangswelle der Einrichtung zum Schalten des Drehmomentes (14) oder einer Eingangswelle der zweiten Gruppe koppelt.

14. Baumaschine, insbesondere Straßenfräsmaschine, Recycler oder Stabilisierer,
- mit einem Antriebsstrang (8) und Machinenrahmen (4), nach einem der Ansprüche 1 bis 13, wobei der Maschinenrahmen (4) von einem Fahrwerk getragen wird.

## Claims

1. A drive train with a machine frame for a construction machine comprising a working device configured as a working drum (6), said drive train (8) comprising the following elements:
- a drive engine (10),
- a traction mechanism (12) for the mechanical drive of the working drum (6) with a drive element and an output element (11, 13) and a traction element (30),
- a device (14) for switching the torque between the drive engine (10) and the working drum (6), and
- a device (16) for driving at least one hydraulic pump,
wherein
- the elements of the drive train (8) are divided into at least two groups,
- the first group (3) shows at least the drive engine (10),
- the second group (5) shows at least the drive element (11) of the traction mechanism (12),
- where the first and the second groups (3, 5) are connected to one another via an articulated coupling device (20),
**characterized in that**
the first group is attached to the machine frame (4) elastically with low spring stiffness for the purpose of reducing the transmission of vibrations to the machine frame (4), and that the second group is attached to the machine frame (4) with high spring stiffness or in a rigid manner.

2. A drive train with a machine frame in accordance with claim 1, **characterized in that** the first group (3) comprises at least the drive engine (10) and the device (16) for driving at least one hydraulic pump, and the second group (5) comprises the device (14) for switching the torque and/or the support of a drive element (11) of the traction mechanism (12) on the drive side.

3. A drive train with a machine frame in accordance with claim 1, **characterized in that** the first group (3) comprises at least the drive engine (10) and the device (14) for switching the torque, and the second group (5) comprises the device (16) for driving at least one hydraulic pump and/or the support of a drive element (11) of the traction mechanism (12) on the drive side.

4. A drive train with a machine frame in accordance with claim 1, **characterized in that** the first group (3) comprises at least the drive engine (10), and the second group (5) comprises the device (16) for driving the at least one hydraulic pump, as well as the device (14) for switching the torque and/or the support of the drive element (11) of the traction mechanism (12) on the drive side.

5. A drive train with a machine frame in accordance with one of the claims 1 to 4, **characterized in that** the articulated coupling device (20) is torsionally rigid.

6. A drive train with a machine frame in accordance with claims 1 to 5, **characterized in that** the articulated coupling device (20) is a cardan shaft.

7. A drive train with a machine frame in accordance with one of the claims 1 to 4, **characterized in that** the articulated coupling device (20) is torsionally flexible.

8. A drive train with a machine frame in accordance with claim 7, **characterized in that** the articulated coupling device is an elastomeric coupling.

9. A drive train with a machine frame in accordance with one of the claims 4 to 8, **characterized in that** the device (16) for driving the at least one hydraulic pump and the device for switching the torque (14), as well as the support of the drive element (11) of the traction mechanism (12) on the drive side form an entity that is jointly attached to the machine frame (4) with high spring stiffness or in a rigid manner.

10. A drive train with a machine frame in accordance with one of the claims 1 to 9, **characterized in that** the device (16) for driving the at least one hydraulic pump consists of a pump transfer case for several hydraulic pumps.

11. A drive train with a machine frame in accordance with one of the claims 1 to 10, **characterized in that** the device (14) for switching the torque is arranged between the device (16) for driving the at least one hydraulic pump and the drive element (11) of the traction mechanism (12) on the drive side.

12. A drive train with a machine frame in accordance with claim 10 or 11, **characterized in that** the transfer case shows a gearbox casing (26) with several hydraulic pumps (18) arranged at an outer circumference of the gearbox casing (26), the said hydraulic pumps (18) being capable of being driven by means of the transfer case, where the hydraulic pumps project from the gearbox casing (26), pointing towards the drive engine (10) or pointing away from the drive engine (10), and where the coupling device (20) extends in the interior space (28) of the gearbox casing (26) that is free from hydraulic pumps (18).

13. A drive train with a machine frame in accordance with one of the claims 1 to 12, **characterized in that** the coupling device (20) permanently couples an output shaft of the drive engine (10), or of the first group, with an input shaft of the device (16) for driving the at least one hydraulic pump, or an input shaft of the device for switching the torque (14), or an input shaft of the second group.

14. A construction machine, in particular a road milling machine, a recycler or a stabilizer, comprising a drive train (8) and a machine frame (4) in accordance with one of claims 1 to 13, said machine frame (4) being supported by a chassis.

## Revendications

1. Chaine cinématique avec bâti de machine pour engin de chantier comprenant un dispositif de travail en forme d'un tambour de travail (6), ladite chaine cinématique (8) comprenant les éléments suivants:
- un moteur d'entrainement (10),
- une transmission de traction (12) pour l'entrainement mécanique du tambour de travail (6), comprenant un élément d'entrée et un élément de sortie (11, 13) et un dispositif de traction (30),
- un moyen (14) de changement du couple entre ledit moteur d'entrainement (10) et ledit tambour de travail (6), et
- un moyen (16) pour l'entrainement d'au moins une pompe hydraulique,
dans laquelle
- les éléments de la chaine d'entrainement (8) sont divisés en au moins deux groupes,
- le premier groupe (3) comprend au moins le moteur d'entrainement (10), et
- le deuxième groupe (5) comprend au moins l'élément d'entrainement (11) de ladite transmission de traction (12),
- ledit premier et ledit deuxième groupe (3, 5) sont couplés par l'intermédiaire d'un moyen de couplage (20) articulé,
**caractérisée en ce que**
ledit premier groupe est élastiquement monté sur le bâti de machine (4) avec une raideur de ressort basse pour réduire la transmission de vibrations sur ledit bâti de machine (4), et **en ce que** le deuxième groupe est monté sur le bâti de machine (4) avec une raideur de ressort élevée ou de manière rigide.

2. Chaine d'entrainement avec bâti de machine selon la revendication 1, **caractérisée en ce que** le premier groupe (3) comprend au moins le moteur d'entrainement (10) et le moyen (16) pour l'entrainement d'au moins une pompe hydraulique, et le deuxième groupe (5) comprend le moyen (14) de changement du couple et/ou le support d'un élément d'entrainement (11) de la transmission de traction (12), côté entrainement.

3. Chaine d'entrainement avec bâti de machine selon la revendication 1, **caractérisée en ce que** le premier groupe (3) comprend au moins le moteur d'entrainement (10) et le moyen (14) de changement du couple, et le deuxième groupe (5) comprend le moyen (16) pour l'entrainement d'au moins une pompe hydraulique et/ou le support de l'élément d'entrainement (11) de la transmission de traction (12), côté entrainement.

4. Chaine d'entrainement avec bâti de machine selon la revendication 1, **caractérisée en ce que** le premier groupe (3) comprend au moins le moteur d'entrainement (10), et le deuxième groupe (5) comprend le moyen (16) pour l'entrainement d'au moins une pompe hydraulique, le moyen (14) de changement du couple et/ou le support de l'élément d'entrainement (11) de la transmission de traction (12), côté entrainement.

5. Chaine d'entrainement avec bâti de machine selon l'une quelconque des revendications 1 à 4, **caractérisée en ce que** le moyen de couplage (20) articulé est rigide à la torsion.

6. Chaine d'entrainement avec bâti de machine selon l'une quelconque des revendications 1 à 5, **caractérisée en ce que** le moyen de couplage (20) articulé est un arbre à cardan.

7. Chaine d'entrainement avec bâti de machine selon l'une quelconque des revendications 1 à 4, **caractérisée en ce que** le moyen de couplage (20) articulé est élastique à la torsion.

8. Chaine d'entrainement avec bâti de machine selon la revendication 7, **caractérisée en ce que** le moyen de couplage articulé est un accouplement élastomérique.

9. Chaine d'entrainement avec bâti de machine selon l'une quelconque des revendications 4 à 8, **caractérisée en ce que** le moyen (16) pour l'entrainement d'au moins une pompe hydraulique, le moyen (14) de changement du couple et/ou le support de l'élément d'entrainement (11) de la transmission de traction (12), côté entrainement, ensemble forment une unité fixée au bâti de machine (4) avec une raideur de ressort élevée ou de manière rigide.

10. Chaine d'entrainement avec bâti de machine selon l'une quelconque des revendications 1 à 9, **caractérisée en ce que** le moyen (16) pour l'entrainement d'au moins une pompe hydraulique est formé par un engrenage de distribution de pompes pour plusieurs pompes hydrauliques.

11. Chaine d'entrainement avec bâti de machine selon l'une quelconque des revendications 1 à 10, **caractérisée en ce que** le moyen (14) de changement du couple est positionné entre le moyen (16) pour l'entrainement d'au moins une pompe hydraulique et le support de l'élément d'entrainement (11) de la transmission de traction (12), côté entrainement.

12. Chaine d'entrainement avec bâti de machine selon la revendication 10 ou 11, **caractérisée en ce que** ledit engrenage de distribution comprend une boite d'engrenage (26) avec plusieurs pompes hydrauliques (18) disposées sur la périphérie externe de la boite d'engrenage (26), qui sont aptes à être entrainées au moyen dudit engrenage de distribution, lesdites pompes hydrauliques étant en saillie de la boite d'engrenage vers ledit moteur d'entrainement (10) ou dans la direction opposée audit moteur d'entrainement (10), et le moyen de couplage (20) s'étendant dans l'espace intérieure (28) de la boite d'engrenage (26) non pas occupée par des pompes hydrauliques (18).

13. Chaine d'entrainement avec bâti de machine selon l'une quelconque des revendications 1 à 12, **caractérisée en ce que** le moyen de couplage (20) couple de manière permanente un arbre de sortie dudit moteur d'entrainement (10) ou dudit premier groupe avec un arbre d'entrée dudit moyen (16) pour l'entrainement d'au moins une pompe hydraulique ou un arbre d'entrée dudit moyen (14) de changement du couple ou un arbre d'entrée dudit deuxième groupe.

14. Engin de chantier, à savoir machine à fraiser des chaussées, recycleur ou stabilisateur, comprenant une chaine d'entrainement (8) avec bâti de machine (4) selon l'une quelconque des revendications 1 à 13, ledit bâti de machine (4) étant supporté par un châssis.
